# EUROPEAN PATENT APPLICATION

(11) **EP 4 671 433 A1**
(43) Date of publication of application: **31.12.2025**
(21) Application number: 25178195.1
(22) Date of filing: 22.05.2025
(51) Int. Cl.: D06M 15/643, D01F 1/10, D01F 6/46, D01F 6/52, D01F 6/90, D01F 6/92, D01F 8/12, D01F 8/14, D01F 11/08, D01F 11/14

(54) **IONOMER-CONTAINING POLYMERIC MATERIAL MONOFILAMENT HAVING A SILICONE OIL COATED SURFACE**

(30) Priority: 24.05.2024 CN 202410659002
(71) Applicant: Celanese Xingda Filaments Co., Ltd, Wuxi, Jiangsu 214183 (CN)
(72) Inventor: FU, Chengjie, Shanghai, 201210 (CN); WEI, Peiling, Shanghai, 201210 (CN); XIA, Jingbing, Wuxi, 214183 (CN); WEI, Linglei, Wuxi, 214183 (CN)
(74) Representative: Jeck, Jonathan

(57) **Abstract**

A monofilament of polymeric material with improved lubricating properties is provided. More specifically, on the basis of the existing silicone oil coated monofilament, by adding ionomers into the polyester and/or nylon materials for the monofilament, polymeric monofilament with further improved lubricating properties can be obtained. The present invention also provides methods of making the above-described monofilament; brush filaments made from the monofilament, and toothbrushes made from the brush filaments.

## Description

### Technical Field

The present invention relates to polymeric monofilament having improved lubricating properties. More particularly, the present invention relates to ionomer-containing monofilament of polymeric material with a silicone oil coated surface. The present invention also relates to a method for preparing the monofilament, and a use of the monofilament in a brush such as a toothbrush.

### Background Art

Nylon and polyester are typical polymeric materials used to make brush filament materials for toothbrushes. It can typically be processed into monofilament by melt extrusion spinning.

In a conventional brush tufting process, it is desirable that the monofilament material be stably transported on a tufting machine. For this reason, various improvements have been developed to improve the lubricating properties of monofilaments, so that the filament tufting process can be performed more smoothly.

One classic technical means is to apply the traditional polymeric monofilament with silicone oil, so as to obtain a monofilament coated with silicone oil on the surface of the monofilament. Through the post-treatment process of the silicone oil coating, the obtained monofilament generally has improved lubricating properties.

Nylon or polyester monofilament can improve lubricating properties by coating the surface with silicone oil at a later stage of spinning. However, when the amount of the silicone oil on the surface of the monofilament is too high or too low, defects may be caused in actual production, for example, when the amount of the coated silicone oil is too large, adhesion easily occurs between the monofilaments; and in a downstream subsequent process such as a tufting process, the monofilaments cannot be stably transported on the machine, which is easy to produce defective products; or when the amount of the coated silicone oil is too small, the surface of the monofilament is too dry, and the friction force is large, resulting in low combing efficiency, reduced monofilament quality and highly defective products in the production process.

It is still desirable to develop monofilament materials with further improved lubricating properties; and it is even more desirable that this property improvement can be established on the basis of the further overcoming of drawbacks of prior art process, such as silicone oil coating technology.

lonomer generally refers to a polymer comprising ionic groups that are carboxylate salts of cations including, but not limited to, at least one of alkali metals, alkaline earth metals, transition metals, and ammonium cations. lonomer resins are generally considered to have, for example, excellent low temperature impact resistance, excellent abrasion resistance and scratch resistance, and the like; ionomers are reported by manufacturers to be applicable to (1) the field of cosmetics: perfume bottle lids, creams, paste containers, and the like; (2) the field of consumer goods: such as various handles, toys such as pet chews, ice barrels, floors; (3) the field of sports equipment: golf shells, surfboards, snowboard skins, ski boots, skating boots, snow hockey helmets; heel liner, cowboy competition vest, and the like.

One typical application of ionomer materials in the prior art is in the packaging industry because they already have excellent heat sealing and adhesive properties. Representative examples of ionomers are sodium or zinc neutralized ethylene/(meth) acrylate copolymerized ionomers. For example, CN 101292793A discloses a high modulus ionomer for packaging.

The use of ionomer compositions as risk proof laminate interlayer sheets is known in the art. For example, U.S. Pat. No. 5759698 discloses a glass laminate interlayer derived from an ionomer resin wherein the ionomer is subjected to a thermal curing treatment with an organic peroxide and a silane reagent.

The use of ionomer compositions as solar electromagnetic encapsulating films or sheets is also known in the art, for example see U.S. Pat. No. 5476553 and the like.

In addition, JP 2002348732A discloses a polyamide monofilament comprising an ionomer and a preparation method thereof, and specifically discloses the following contents (see paragraphs [0021] - [0037] of the specification): polyamide monofilament can be manufactured as follows: in the case of not using precompounded pellets, a prescribed amount of polyamide pellets were respectively pre-metered and mixed with at least one pellet or powder selected from the group consisting of an ionomer resin, a styrene-2-isopropenyl-2-oxazoline random copolymer or a styrene-acrylonitrile-2-isopropenyl-2-oxazoline random copolymer, respectively, and melting compounded at a temperature of 20-60°C higher than the melting point of the polyamide used, and then spun directly from a spinneret. While polyamide monofilaments are said to be conventionally used for various applications due to their superior abrasion resistance compared to polyester monofilaments and the like, the blending of the polyamide pellets with at least one pellet or powder selected from the three ingredients is for the purpose of improving the abrasion resistance of the composite monofilaments, so that the composite nylon monofilaments can be better used, for example, as grass trimming lines.

The inventors have surprisingly found that in the silicone oil coated nylon- and/or polyester-based monofilament material, by adding the ionomer thereinto, the obtained composite monofilament material has further improved lubricating properties, so that the obtained composite monofilament can be better used in the tufting process of brush manufacturing, thereby improving the combing efficiency in the production process, and further improving the monofilament quality, reducing the defective rate, and the like. Wherein the ionomer is preferably a copolymer of ethylene and a C₃-C₈ ethylenically unsaturated monocarboxylic acid, and at least a portion of the carboxylic acid is neutralized with metal ions.

### Summary of the invention

In one aspect of the present invention, the present invention provides a ionomer-containing polymeric monofilament with a silicone oil coated surface, wherein the ionomer is a copolymer of ethylene and C₃-C₈ ethylenically unsaturated monocarboxylic acid, and at least a portion of the carboxylic acid is neutralized by metal ions; and wherein the silicone oil is preferably food-grade silicone oil selected from methyl silicone oil, amino silicone oil, phenyl silicone oil and the like.

In another aspect of the present invention, the present invention also provides a method for preparing the polymeric monofilament as described above, comprising the following steps:
1) uniformly mixing a base resin nylon and/or polyester with an ionomer and optionally other additives in a mixer to obtain a premix;
2) feeding the premix prepared in step 1) into a screw extruder for melt extrusion; after the melt is extruded and spun out from a spinneret, preliminary cooling being conducted, and then post-processing steps such as thermal drawing and setting being subjected to, so as to obtain a melt-extruded monofilament;
3) passing the melt-extruded monofilament obtained in step 2) through a silicone oil emulsion, and then the silicone oil coated monofilament being further wound, thus obtaining an ionomer-containing polymeric monofilament with a silicone oil coated surface.

In yet another aspect of the present invention, the present invention further provides another method for preparing a monofilament of a polymeric material, comprising the following steps of:
1) directly feeding base resin nylon and/or polyester, ionomer and optionally other additives into a screw extruder for melt extrusion, respectively; after the melt being extruded and spun out from a spinneret, preliminary cooling being conducted, and then post-processing steps such as thermal drawing and setting being subjected to, so as to obtain a melt-extruded monofilament;
2) the melt-extruded monofilament in step 1) being passed through a silicone oil emulsion, after being coated with silicone oil, the monofilament being further subjected to product winding, thus obtaining an ionomer-containing polymeric monofilament with a silicone oil coated surface.

In a further aspect of the present invention, the present invention provides a method for improving the lubricating properties of a polymeric monofilament coated with silicone oil, comprising adding an ionomer to the polymeric monofilament, wherein the silicone oil is preferably a food grade silicone oil selected from the group consisting of methyl silicone oil, amino silicone oil, phenyl silicone oil and the like; and wherein the ionomer is a copolymer of ethylene and C₃-C₈ ethylenically unsaturated monocarboxylic acid, and at least a portion of the carboxylic acid is neutralized by metal ions.

Compared with traditional nylon or polyester monofilament coated with silicone oil only, the particular ionomer-containing polymeric monofilament with silicone oil coated surface has excellent lubricating properties, is easy to comb, and can be more stably transported by a tufting device in the subsequent process.

### Detailed description of the invention

Except in the examples, or where otherwise expressly indicated, all numbers in this description indicating amounts of material or reaction conditions, physical properties of materials, and/or use are to be optionally understood as modified by the word "about".

All amounts are by weight of the composition unless otherwise specified.

It should be noted that any specific upper value may be associated with any specific lower value when specifying any numerical range.

For the avoidance of doubt, the word "comprising" is intended to mean "including," but not necessarily "consisting of" or "composed of." In other words, the listed steps or options need not be exhaustive.

The disclosure of the invention found herein is considered to cover all embodiments in which the claims are found to be multiply dependent on one another, regardless of the fact that the claims may be found to be free of multiple dependencies or redundancy.

Where a feature is disclosed with respect to a particular aspect of the invention, such as a composition of the invention, such disclosure is also considered applicable, mutatis mutandis, to any other aspect of the invention, such as a method of the invention.

Also, the indefinite articles "a" and "an" preceding an element or component of the invention are intended to be nonrestrictive regarding the number of instances (i.e. occurrences) of the element or component. Therefore "a" or "an" should be read to include one or at least one, and the singular word form of the element or component also includes the plural unless the number is obviously meant to be singular.

### Polyamide Resins

One class of base resins for monofilament materials useful in the present invention is nylon, otherwise known as polyamide PA.

The nylon used in the present invention has a linear backbone that can be produced by reacting a dicarboxylic acid with a diamine to form a linear condensation nylon. Non-limiting examples of dicarboxylic acids include C6 to C12 aliphatic dicarboxylic acids such as adipic acid, pimelic acid, suberic acid, azelaic acid, sebacic acid, undecanedioic acid, dodecanedioic acid, and aromatic dicarboxylic acids such as terephthalic acid, isophthalic acid, and 2,6-naphthalenedicarboxylic acid. Non-limiting examples of diamines include linear aliphatic or cycloaliphatic diamines such as ethylenediamine, trimethylene diamine, tetramethylene diamine, pentamethylene diamine, hexamethylene diamine, isophorone diamine, and 1,4-cyclohexanebis(methylamine), decanediamine, and non-limiting examples of diamines can also include aromatic diamines such as phenylenediamine and benzidine. In the art, for example, the resulting polyamides or nylons are named according to the numbers of carbon atoms in the dicarboxylic acid and diamine monomer molecules. For example, polyamides derived from the polymerization of adipic acid with hexamethylene diamine are designated polyamide 66 or nylon 66 or PA66, and so on; those skilled in the art are familiar with the knowledge of this aspect.

The nylons used in the present invention may also be produced by ring-opening polymerization of amino-containing carboxylic acid compounds or lactams thereof. Non-limiting examples of amino-containing carboxylic acid compounds include C6 to C12 aliphatic terminal aminocarboxylic acid compounds such as 6-amino-caproic acid, 11-amino-undecanoic acid, 12-aminododecanoic acid. In the art, for example, the polyamides are named according to the total number of carbon atoms of the lactams, with typical lactams derived from amino-containing carboxylic acid compounds having 6, 11 or 12 carbon atoms being named as nylon 6, nylon 11 and nylon 12, and so on; and those skilled in the art are familiar with the knowledge of this aspect.

In the embodiments of the invention, nylons that may be used are selected from PA612, PA610, PA512, PA510, PA6, PA66, PA46, PA1010, PA11, PA12, or a combination.

In a particularly preferred embodiment according to the present invention, the nylon is selected from PA612. An illustrative example of PA612 is nylon PA612 available from Celanese Corporation.

### Polyester Resins

Another class of base resins for monofilament materials useful in the present invention is polyester.

The polyester used in the present invention has a linear backbone that can be produced by reacting a dicarboxylic acid with a diol to form a linear condensation polyester. Non-limiting examples of dicarboxylic acids include C6 to C12 aliphatic dicarboxylic acids such as adipic acid, pimelic acid, suberic acid, azelaic acid, sebacic acid, undecanedioic acid, dodecanedioic acid; and aromatic dicarboxylic acids such as terephthalic acid, isophthalic acid, and 2,6-naphthalene-dicarboxylic acid.

Non-limiting examples of polyesters include the reaction product of terephthalic acid and ethylene glycol, i.e., polyethylene terephthalate (PET), and similarly, polybutylene terephthalate (PBT), polytrimethylene terephthalate (PTT), polybutylene succinate (PBS). Copolyesters include, for example, polybutylene adipate/terephthalate (PBAT), polybutylene sebacate/adipate (PBSA), co-hydroxyalkanoates, and the like.

In a preferred embodiment of the present invention, the polyester is selected from PET, PBT, PTT, PBS or a mixture thereof. In a particularly preferred embodiment of the invention, the polyester is polybutylene terephthalate PBT.

Exemplified representatives of the PBT include PBT B2520 and the like available from BASF, PBT L2100 and the like available from Sinopec Yizheng Chemical Fibres, PBT 1200 211D/211M and the like available from Changchun Chemical Industry, and spinning grade PBT and the like available from Hengli Chemical Fibers.

### Ionomers

As used herein, the term "ionomer" refers to a polymer comprising ionic groups that are carboxylate salts of cations including, but not limited to, at least one cation of alkali metals, alkaline earth metals, transition metals, and ammonium cations.

As used herein, the term "ionomer" refers to a polymer comprising ionic groups that are carboxylate salts of cations including, but not limited to, one or more cation(s) of alkali metals, alkaline earth metals, transition metals, and ammonium cations. As defined herein, such "ionomer" polymers are typically prepared by partially or fully neutralizing the carboxylic acid groups of a precursor or "parent" polymer, for example, by a reaction with a base; said precursor or "parent" polymer is an acidic copolymer. Ionomers are generally named by the cation used to neutralize the carboxylic acid. For example, using sodium hydroxide to neutralize at least a portion of the carboxylic acid groups of a copolymer of ethylene and methacrylic acid produces a sodium ionomer (or sodium neutralized ionomer) comprising sodium carboxylate.

Broadly speaking, the ionomers according to the present invention are ionized partially neutralized derivatives of a parent acid copolymer (alternatively designated precursor acid copolymer) comprising copolymerized α-olefin units and α,β-ethylenically unsaturated carboxylic acid units. Examples of suitable ionomers include, for example, those described in U.S. Pat. No. 7,763,360 and US Patent Application Publication 2010/0112253.

In one embodiment of the invention, the α-olefin units of the precursor acid copolymer have 2 to 10 carbon atoms and the α,β-ethylenically unsaturated carboxylic acid units have 3 to 8 carbon atoms. The amount of copolymerized α-olefin, the amount of α,β-ethylenically unsaturated carboxylic acid and, when present, the amount of one or more other comonomers, are complementary, such that the sum of the weight percentages of all comonomers in the precursor acid copolymer is 100 weight percent. In representative non-limiting examples, the precursor acid copolymer comprises about 15 to about 30 weight percent, or about 18 to about 25 weight percent, or about 19 to about 23 weight percent of copolymerized α,β-ethylenically unsaturated carboxylic acid.

Suitable α-olefin comonomer units include, but are not limited to, ethylene, propylene, 1-butene, 1-pentene, 1-hexene, 1-heptene, 3-methyl-1-butene, 4-methyl-1-pentene, and the like, and mixtures of two or more thereof. In one possible embodiment, the α-olefin is ethylene.

Suitable α,β-ethylenically unsaturated carboxylic acid comonomer units include, but are not limited to, acrylic acid, methacrylic acid, itaconic acid, maleic acid, maleic anhydride, fumaric acid, monomethyl maleic acid, and mixtures of two or more thereof.

In a possible embodiment, the α,β-ethylenically unsaturated carboxylic acid is selected from acrylic acid, methacrylic acid, and mixtures thereof.

In one embodiment of the present invention, the α,β-ethylenically unsaturated carboxylic acid is methacrylic acid. It is noticeable that the acid copolymers consist essentially of copolymerized ethylene units and α,β-ethylenically unsaturated carboxylic acid units; that is, dimers of ethylene and α,β-ethylenically unsaturated carboxylic acids.

In a preferred embodiment of the present invention, the ionomer is a copolymer of ethylene and a C₃-C₈ α,β-ethylenically unsaturated monocarboxylic acid, and at least a portion of the carboxylic acid is neutralized by a metal ion.

In a particularly preferred embodiment of the invention, the α,β-ethylenically unsaturated carboxylic acid is methacrylic acid or acrylic acid. it is notable that in the context of the present application, the expression (meth) acrylic acid means acrylic acid and/or methacrylic acid. In other words, in the most preferred embodiments of the present invention, the ionomers of the present invention are ethylene-methacrylic acid dimers, ethylene-acrylic acid dimers, or mixtures thereof.

In a preferred embodiment of the invention, the acid moiety in the ionomer resin is neutralized with a metal ion selected from the group consisting of sodium, zinc, lithium, magnesium, calcium, and any mixtures thereof.

In a particularly preferred embodiment of the invention, wherein the acid moiety in the ionomer resin is neutralized with a metal ion selected from the group consisting of sodium, zinc, and any mixture thereof.

lonomers useful in the present invention include commercially available ionomers, including, for example, lotek^{™} (ethylene-acrylic acid) from Exxon; Amplify^{™} (ethylene-acrylic acid copolymer) from Dow Chemicals; and Surlyn^{®} (ethylene-methacrylic acid copolymer) from Dow Chemicals.

In a particularly preferred embodiment of the invention, the ionomer is selected from the Dow Chemicals' Surlyn^{®} series of products, specific illustrative examples include Surlyn^{®} 8920, Surlyn^{®} 9910, and the like; which are the sodium and zinc salts, respectively, of ethylene-methacrylic acid copolymer resins.

### Silicone Oil

In an embodiment of the present invention, in view of the desired application field of dental brush filaments of the target product, the applicable silicone oils mainly include food-grade silicone oils.

Silicone oil generally refers to a linear polysiloxane product that remains in a liquid state at room temperature and generally has the structural formula shown below: 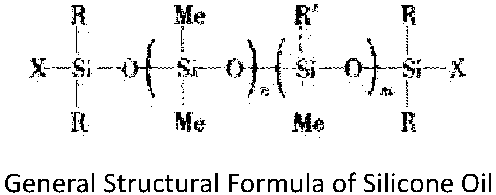 wherein, R is alkyl, aryl, R' is alkyl, aryl, hydrogen, carbon functional group, amino-containing alkyl, and polyether chain, etc.; X is alkyl, aryl, alkenyl, hydrogen, hydroxyl, alkoxy, acetoxy, chloro, carbon functional group, polyether chain, etc.; n, m = 0, 1, 2, 3, etc.

According to the present invention, in the structure shown above, when all the organic groups are methyl, the silicone oil is called methyl silicone oil. Other organic groups may also be used in place of a portion of the methyl groups, so as to improve certain properties of the silicone oil and to accommodate a variety of different uses. Common other groups include hydrogen, ethyl, phenyl, chlorophenyl, trifluoro-propyl, and the like.

In an embodiment of the present invention, the silicone oil may generally be used in the form of an emulsion, i.e., silicone oil emulsions may be used in the present invention. In a preferred embodiment of the present invention, the silicone oil emulsion is usually coated on the surface of the monofilament after being diluted with water.

Illustrative examples of silicone oils that may be used in embodiments of the invention are: DOWSIL^{™} SH 7024, DOWSIL^{™} 8024, DOWSIL^{™} MEM 0024 from Dow Inc.; Elkem SILCOLAPSE^{™} 7140 from Elkem Silicones; Momentive SM2128 from Momentive Performance Materials Inc.; GE SM 2128 from GE Silicones; Dow Corning^{®} 24 Emulsion from Dow Corning, Xiameter^{®} MEM-0024 from Dow Performance Silicones, and the like.

### Other Additives

In the polymeric monofilament of the present invention, other additives may also be added thereinto as required, including but not limited to antioxidants, light stabilizers, antistatic agents, lubricants, plasticizers, fillers, antibacterial agents, etc.

In the present disclosure, the antioxidant may be any antioxidant commonly used in the art; and in a preferred embodiment of the present disclosure, the antioxidant is selected from dibutyl hydroxytoluene (BHT), phenyl-β-naphthylamine, alkyl p-quinone, thioether, phenyl salicylate, mercapto thioether, thio-propionate, hindered phenol, etc.

In the present invention, the antistatic agent may be any antistatic agent commonly used in the art, and in a preferred embodiment of the present invention, the antistatic agent is selected from the group consisting of quaternary ammonium salts, ethoxylated amines, aliphatic esters, sulfonated paraffins, and combinations thereof.

In the present invention, the lubricant may be any lubricant commonly used in the art. In a preferred embodiment of the invention, the lubricant is selected from aliphatic esters (e.g., monoglycerides of fatty acids) and combinations thereof.

In the present invention, the plasticizer may be any plasticizer commonly used in the art, and in a preferred embodiment of the present invention, the plasticizer is selected from the group consisting of terephthalate ester, phthalate ester, aliphatic dibasic acid ester, phosphate, chlorinated paraffin and combinations thereof.

In the present invention, the filler may be any filler commonly used in the art, including but not limited to calcium carbonate, glass fiber, glass flake, aluminum flake, glass bead, carbon fiber, talc, mica, wollastonite, calcined clay, kaolin, diatomaceous earth, sodium fluoride, magnesium sulfate, magnesium silicate, barium sulfate, titanium dioxide, aluminum sodium carbonate, potassium titanate, and mixtures thereof.

### Preparation of Monofilament

The monofilament used in the present invention can be realized by conventional melt spinning technology in the art.

In general, the monofilament according to the present invention are prepared as follows: the base polymer and other components such as ionomer are heated and melted in a screw extruder, the melt is extruded from a spinneret hole by a metering pump to form a fine flow, the fine flow of the melt is cooled and solidified, then is stretched after heating, and thereafter is coated with silicone oil and is further wound, to obtain the finished monofilament.

For example, according to embodiments of the present invention, the base polymer and all other components may be mixed prior to the screw extruder, and then the mixed premix is passed together through a charger into the extruder for melt blending. Alternatively, the base polymer and all other components may be fed into the screw extruder directly through their respective feeding ports and then be melt blended; or, the base polymer and a portion of the components may be mixed firstly and then be fed into the screw extruder together with other remaining components through their respective feeding ports for melt blending. Those skilled in the art may perform the above conventional steps according to actual needs.

According to a preferred embodiment of the present invention, the base polymer and all other components may be mixed prior to the screw extruder, and then the mixed premix is fed together into the extruder for subsequent steps, including melt blending.

According to another preferred embodiment of the present invention, the base polymer and all other components may be fed into a screw extruder via respective feeding ports prior to further subsequent steps including melt blending.

### Coating of Silicone Oil

In a specific embodiment according to the present invention, after the monofilament is prepared by melt extrusion spinning as known in the art, the monofilament obtained in the previous step needs to be passed through a silicone oil emulsion to be coated with the silicone oil. In particular, before winding, a thin film of silicone oil emulsion is uniformly coated on the surface of the monofilament, so that the silicone oil emulsion can penetrate into the monofilament fibers, but most of the silicone oil emulsion still stays on the surface of the monofilament fibers, which can make the monofilament bundle easy to be combed, and obtain a bundle having neat monofilament arrangement. The amount of silicone oil coated on the monofilament fibers should be appropriate; when the amount of the coated silicone oil is too large, it will cause adhesion between monofilaments, and the monofilaments cannot be normally transported on filament tufting machine in the subsequent filament tufting process; and when the amount of the coated silicone oil is too small, it will cause the bundle to be dry and difficult to be combed, and entanglements and overlapping of the monofilaments in the bundle can not be avoided, and the entanglements and overlapping of these monofilaments will cause defects for downstream products, i.e., brushes.

The present invention will be described in more details below with reference to the following examples, and the examples of the present invention are only for the purpose of illustration on the technical solutions of the present invention, and are not for limiting the scope of the present invention. Those skilled in the art can make improvements and adjustments to the technical solutions without departing from the spirit of the present disclosures, and the specific protection scope of the present disclosure will be defined by the appended claims.

### Specific Embodiments of the Description

Description of the Base Materials
Polybutylene terephthalate (PBT): commercially available polybutylene terephthalate: PBT L2100, available from Sinopec Yizheng Chemical Fibres;
Nylon 612: PA612 Zytel^{®} 151 NC010 available from Celanese Corporation;
lonomers: Surlyn^{®} are all purchased from Dow Chemicals, and the specific grades in the examples are Surlyn^{®} 9910 (zinc salt of ethylene-methacrylic acid copolymer) and Surlyn^{®} 8920 (sodium salt of ethylene-methacrylic acid copolymer), respectively;
Silicone Oil: An aqueous emulsion of food grade polydimethylsiloxane: for example, DOWSIL^{™} SH 7024 available from Dow Inc.

### Description of Test Methods

### Insertion force

An Instron universal material testing machine was used; after having removed the paper package thereof, a filament cutpiece having a same 30-60 mm diameter specification was horizontally laid down in a semicircular-shaped sample holder, the end of the filament being aligned, then the semicircular-shaped sample holder was loaded onto the Instron lower fixture, and then, a maximum force was measured by a load cell connected to a semicircular-shaped probe with an end diameter of about 11 mm which was slowly compressed into the filament cutpiece from its upper surface at a speed of 3mm/min until 13 mm deep into the filament cutpiece; and this maximum force was recorded as the insertion force. The value of this insertion force in Newtons (N) reflects the lubricating properties of the monofilament.

In an embodiment according to the present invention, the better the lubricating properties of the monofilament, the smaller the value of the insertion force applied to the probe; conversely, the worse the lubricating properties of the monofilament, the higher the value of the insertion force applied to the probe.

### Combing Evaluation

A special comb with a tooth height of 38 mm, a tooth spacing of 4.5 mm, and a tooth diameter of about 2 mm was used to comb a filament bundle having a diameter of 50±2 mm and a length of 1200±15 cm. If the comb can be combed from one end of the filament bundle to the other end, the test result is recorded as that the combing can be conducted smoothly; otherwise, the combing cannot be conducted smoothly.

### Examples

### Example 1

Composite polymeric monofilament of nylon 612/ionomer having a silicone oil emulsion coated surface

General description of the preparation process is as follows:
1) uniformly mixing 0.5-15 wt% of ionomer with 85-99.5 wt% of nylon 612 resin in a high speed mixer, then feeding the mixture to a single (twin) screw extruder for melt blending and extrusion;
2) extruding the melt and spinning it out from a spinneret plate to form filament, then cooling it in a cooling liquid, after passing through slow rollers, drawing the filament into a hot water bath for stretching with a draw ratio of 3 to 5 times; after stretching, heat setting was performed to obtain a preliminary monofilament;
3) Under a fixed pulling speed, passing the monofilament prepared in step 2) through a silicone oil emulsion, and after a further procedure such as winding, a silicone oil coated nylon 612/ionomer-containing nylon based monofilament were prepared.
4) The monofilament obtained in step 3) were all cut to a length of 1-3 meters, a combing process as described above was then performed, during which a combing evaluation was performed; after the combing process, the monofilament were packaged into a filament bundle with a diameter of 50-80 mm, and a filament cutpiece having a certain size was cut out for an insertion force test.

Specifically, wherein, the weight based formulation of the specific components in step 1) was recorded in Table 1, and the extrusion was carried out in a single-screw extruder; the draw ratio in step 2) was 4 times; the monofilament prepared in step 2) was passed through a silicone oil emulsion under a fixed high-speed pulling in step 3); and the monofilament obtained in step 3) were cut into 2 meters in length in step 4) for combing process, and combing evaluation was thus carried out; after the combing process, the monofilament were packaged into a filament bundle with an initial diameter of 50 mm; then a filament cutpiece with a height of 29.5 mm was cut out, and this filament cutpiece was subjected to an insertion force test for lubricating properties by using an Instron universal material testing machine.

The results were shown in Table 1 below.

**Table 1.**

| Samples | Base material | Monofilament Diameter (mm) | Amount of the coated silicone oil * ppm | Nylon 612 (wt.%) | Surlyn^{®} 9910 (wt.%) | Insertion Force (N) | Combing Evaluation |
|---|---|---|---|---|---|---|---|
| 1 | Nylon 612 | 0.152 | 300 | 97 | 3 | 1.9 | Smooth combing |
| 2 | Nylon 612 | 0.152 | 300 | 100 | 0 | 4.1 | Smooth combing |
| 3 | Nylon 612 | 0.152 | 0 | 97 | 3 | 17.8 | Failure to comb smoothly |

| | | | | | | | |
|---|---|---|---|---|---|---|---|
| *The amount of the coated silicone oil was determined by using a Bruker Minispec nuclear magnetic analyzer: by using the NMR signal intensity which was a function of the number of nuclear magnetic moments, the content of silicone oil in a certain amount (about 5.5g) of monofilament was calculated . | | | | | | | |

### Example 2

Composite polymeric monofilament of polyester PBT/ionomer having a silicone oil emulsion coated surface

The processes of conducting a melt spinning of PBT/ionomer monofilament and coating of silicone oil emulsion was similar to those for the nylon based monofilament in Example 1, except that the spinning extrusion resin component, the ionomer component (Surlyn^{®} 9910, 8920) and the like were respectively changed, so as to prepare the following PBT based monofilament with the same monofilament diameter. The combing process as described in Example 1 was repeated to perform a combing evaluation, and an insertion force test was further performed.

The results were shown in Table 2 below.

**Table 2**

| Samples | Base Material | Monofilament Diameter (mm) | PBT (wt.%) | Amount of the coated silicone oil* ppm | Ionomer Surlyn^{®} (wt.%) | | Insertion Force (N) | Combing Evaluation |
|---|---|---|---|---|---|---|---|---|
| | | | | | 9910 | 8920 | | |
| 5 | PBT | 0.083 | 98 | 300 | 0 | 2 | 1.1 | Smooth combing |
| 6 | PBT | 0.083 | 98 | 300 | 2 | 0 | 0.8 | Smooth combing |
| 7 | PBT | 0.083 | 100 | 300 | 0 | 0 | 1.6 | Smooth combing |
| 8 | PBT | 0.083 | 98 | 0 | 2 | 0 | 10.9 | Failure to comb smoothly |

| | | | | | | | | |
|---|---|---|---|---|---|---|---|---|
| *The amount of the coated silicone oil was determined by using a Bruker Minispec nuclear magnetic analyzer: by using the NMR signal intensity which was a function of the number of nuclear magnetic moments, the content of silicone oil in a certain amount (about 5.5g) of monofilament was calculated. | | | | | | | | |

The results showed that, for nylon-based monofilament and the PBT-based monofilament, when silicone oil was not coated, the values of the insertion force of the obtained monofilament were very high, indicating that the lubricating properties of the obtained monofilament were very poor; by coating the surface of the above monofilament with silicone oil, the value of the insertion force of the obtained monofilament were improved (the insertion force is reduced), and the combing evaluation also obtained positive results. By further adding the ionomer resin into the nylon-based monofilament and the PBT-based monofilament, the insertion force of the obtained monofilament containing ionomer coated with silicone oil were further enhanced (the value was further reduced), and the combing evaluations also further supported the enhancement of the lubricating properties of the obtained monofilaments.

Specifically, the insertion force value of the nylon/ionomer monofilament coated with the same silicone oil is 1.9N, and compared with the nylon monofilament without the ionomer which, although was also coated with the silicone oil, the insertion force value was just 4.1N. By adding the ionomer thereinto, the insertion force of the nylon/ionomer monofilament was decreased by more than 50%. For PBT/ionomer monofilament coated with the same silicone oil, the insertion force was as low as 0.8N. However, for PBT based monofilament without ionomer, although it was also coated with silicone oil, the insertion force value is 1.6N; by further adding ionomer thereinto, the insertion force of the PBT/ionomer monofilament was decreased by approximately half.

There is no teaching in the prior art that ionomer has this aspect of performance.

## Claims

1. A composite polymeric monofilament having a surface coated with a silicone oil, the monofilament comprising an ionomer and a nylon (PA) and/or a polyester; wherein the ionomer is a copolymer of ethylene and C₃-C₈ ethylenically unsaturated monocarboxylic acid, at least a portion of the carboxylic acid is neutralized by metal ions; and the content of the ionomer is from 0.5-15% by weight, preferably 1-10% by weight, based on the total weight of the composite polymeric monofilament.

2. The composite polymeric monofilament according to claim 1, wherein the ionomer is a copolymer of ethylene and (meth) acrylic acid.

3. The composite polymeric monofilament according to claim 1, wherein the acid moiety in the ionomer is neutralized by a metal ion selected from the group consisting of sodium, zinc, lithium, magnesium, calcium and any mixture thereof.

4. The composite polymeric monofilament according to claim 3, wherein the acid moiety in the ionomer is neutralized by a metal ion selected from the group consisting of sodium, zinc and any mixture thereof.

5. The composite polymeric monofilament according to any of claims 1 to 4, wherein the nylon is selected from PA612, PA610, PA512, PA510, PA6, PA66, PA46, PA1010, PA11, PA12, or a combination thereof.

6. The composite polymeric monofilament according to claim 5, wherein the nylon is PA612.

7. The composite polymeric monofilament according to any of claims 1 to 4, wherein the polyester is selected from PET, PBT, PTT, PBS or a combination thereof.

8. The composite polymeric monofilament according to claim 7, wherein the polyester is PBT.

9. The composite polymeric monofilament according to any of claims 1 to 4, wherein the silicone oil is a food-grade silicone oil; and the food-grade silicone oil is selected from an aqueous emulsion of polydimethylsiloxane.

10. A method for preparing the composite polymeric monofilament according to any of preceding claims, comprising the following steps of:
1) uniformly mixing a base resin nylon and/or polyester with an ionomer and optionally other additives in a mixer to obtain a premix;
2) feeding the premix prepared in step 1) into a screw extruder for melt extrusion; after the melt is extruded and spun out from a spinneret plate, preliminary cooling being performed, and then conducting post-processing steps such as heat drawing and heat setting, to obtain a melt-extruded monofilament;
3) passing the melt-extruded monofilament from step 2) through a silicone oil emulsion to coat the monofilament surface with silicone oil, and by further conducting product winding, to obtain an ionomer-containing polymeric monofilament having a silicone oil coated surface.

11. A method for preparing the composite polymeric monofilament according to any of claims 1 to 9, comprising the following steps of:
1) directly feeding a base resin nylon and/or polyester, an ionomer and optionally other additives into a screw extruder for melt extrusion, respectively; after the melt is extruded and spun out from a spinneret plate, preliminarily conducting cooling, and then conducting post-processing steps such as heat drawing and heat setting treatment, to obtain a melt-extruded monofilament;
2) passing the melt-extruded monofilament from step 1) through a silicone oil emulsion to coat the monofilament surface with silicone oil, and by further conducting product winding, obtaining an ionomer-containing polymeric monofilament having a silicone oil coated surface.

12. A composite polymeric monofilament having a silicone oil coated surface, comprising an ionomer and a nylon (PA) and/or a polyester, and the polymeric monofilament has a core-shell structure, wherein the shell layer or core layer of the core-shell structure is composed of nylon or polyester, respectively, and the ionomer is present at least in the shell layer of the core-shell structure; wherein the ionomer is a copolymer of ethylene and C₃-C₈ ethylenically unsaturated monocarboxylic acid, and at least a portion of the carboxylic acid is neutralized by metal ions.

13. A method for improving the lubricating properties of a composite polymeric monofilament having a silicone oil coated surface, comprises adding an ionomer to the polymeric monofilament, wherein the silicone oil is preferably a food grade silicone oil, and the food grade silicone oil is selected from methyl silicone oil, amino silicone oil, phenyl silicone oil and the like; and wherein the ionomer is a copolymer of ethylene and C₃-C₈ ethylenically unsaturated monocarboxylic acid, and at least a portion of the carboxylic acid is neutralized by metal ions.

14. A brush, said brush being made of the composite polymeric monofilament according to any of claims 1 to 9 and 12, or made of the polymeric monofilament prepared by the method according to claim 10 or 11.

15. The brush according to claim 14, wherein the brush is a toothbrush.
